**Europäisches Patentamt**

**European Patent Office**

**Office européen des brevets**

(19)

(11) Veröffentlichungsnummer: **0 002 488**
**B1**

# EUROPÄISCHE PATENTSCHRIFT

(12)

(45) Veröffentlichungstag der Patentschrift:
**18.02.81**

(21) Anmeldenummer: **78101568.0**

(22) Anmeldetag: **05.12.78**

(51) Int. Cl.³: **C 08 G 63/00,** C 09 D 3/64,
C 09 D 5/02

(54) Verfahren zur Herstellung von wasseremulgierbaren lufttrocknenden Lackbindemitteln.

(30) Priorität: **12.12.77 AT 8838/77**

(43) Veröffentlichungstag der Anmeldung:
**27.06.79 Patentblatt 79/13**

(45) Bekanntmachung des Hinweises auf die Patenterteilung:
**18.02.81 Patentblatt 81/7**

(84) Benannte Vertragsstaaten:
**CH DE FR GB IT NL SE**

(56) Entgegenhaltungen:
**AT-A- 339 450**
**DE-A-2 622 646**
**DE-B-1 007 916**
**GB-A-1 106 966**
**US-A-2 897 165**

(73) Patentinhaber: **Vianova Kunstharz Aktiengesellschaft,**
**A-8402 Werndorf (AT)**

(72) Erfinder: **Zückert, Bertram, Dr.,**
**Krottendorferstrasse 90/19, A-8052 Graz (AT)**

(74) Vertreter: **Müller, Hans-Jürgen, Dipl.-Ing. et al,**
**Lucile-Grahn-Strasse 38/II, D-8000 München 80 (DE)**

ACTORUM AG.

Verfahren zur Herstellung von wasseremulgierbaren lufttrocknenden Lackbindemitteln

Die Erfindung betrifft ein Verfahren zur Herstellung von wasseremulgierbaren lufttrocknenden Lackbindemitteln auf der Basis von modifizierten trocknenden fetten Ölen, wobei sich die daraus hergestellten Emulsionen durch eine verbesserte Stabilität, Trocknung und Wasserfestigkeit auszeichnen.

Unter dem Begriff «modifizierte trocknende fette Öle» werden in der Literatur Umwandlungsprodukte fetter Öle verstanden, bei denen die Modifizierung entweder an den Doppelbindungen (polymerisierte oder isomerisierte Öle, dehydratisiertes Rizinusöl, vinyl- oder cyclopentadienmodifizierte Öle u.dgl.) oder durch Umwandlung des Glyceridsystems (Alkydharze, Urethanharze, etc.) erfolgt. In den meisten Fällen laufen mehrere dieser Möglichkeiten parallel (siehe u.a. Kittel, Lehrbuch der Lacke und Beschichtungen, Verlag W.A. Colomb, Stuttgart-Berlin, 1971). In der vorliegenden Anmeldung werden diese Umwandlungsprodukte fetter Öle als Alkydharze und Öllackbindemittel bezeichnet.

In einer grossen Anzahl von Patentschriften wird die Herstellung von wasseremulgierbaren Alkydharzen und Öllackbindemitteln durch Einbau von Polyäthylenglykol (PÄG) beschrieben (siehe unter anderem die US-PSen 2,634,245; 2,853,459; 3,133,032; 3,223,659; 3,379,548; 3,437,615; 3,437,618; 3,438,795; 3,442,835; 3,457,206; 3,639,315; die DT-OS 14 95 032 oder die GB-PS 989,252; 991,627; 1,038,696 und 1,044,821). Weitere Patentschriften betreffen die Herstellung von verbesserten Emulsionen durch Kombination von PÄG-reichen mit PÄG-freien Alkydharzen (z.B. OE-PS 333035) oder durch zusätzliche Modifizierung mit anderen hydrophilen Komponenten (z.B. OE-PS 336277).

Alle Verbesserungsversuche haben aber eine grundsätzliche Schwäche dieser Bindemittelklassen nicht beseitigen können: Die begrenzte und zum Teil unzureichende Lagerstabilität der Emulsionen und der daraus hergestellten Lacke. Die Lacke setzen oft schon nach wenigen Wochen (bei erhöhter Temperatur in noch kürzerer Zeit) irreversibel ab und werden damit unbrauchbar. Ausserdem sind Trocknungsgeschwindigkeit und Wasserfestigkeit der Lackfilme immer noch verbesserungsbedürftig.

Die mangelhafte Lagerstabilität der Alkydharzemulsionen ist kein rein physikalisches Phänomen: Der Koagulation geht eine teilweise Verseifung der Harzmoleküle voraus. Dass in Emulsionen günstige Bedingungen für einen hydrolytischen Angriff gegeben sind, liegt auf der Hand: Die wässerige Phase ist leicht alkalisch – der pH liegt in der Regel zwischen 7 und 10; die Angriffsfläche ist gross – sie nimmt mit sinkendem Teilchendurchmesser potentiell zu. Daher sind feinteilige Emulsionen, die zunächst die beste Stabilität aufweisen, besonders empfindlich.

Alle bekannten Verfahren zur Herstellung von PÄG-modifizierten Alkydharzen haben gemeinsam, dass das PÄG über Esterbindungen eingebaut wird. Diese Esterbindungen werden relativ leicht gespalten, da die räumlichen Voraussetzungen für den Angriff des Wassers durch die Hydratisierung der Polyäthylenglykolkette sehr günstig sind. Durch Abspaltung des Polyäthylenglykols verlieren die Moleküle den amphipathischen Charakter und damit die Emulgatorwirkung.

Eine Erhöhung der Verseifungsbeständigkeit wird durch die in der OE-PS 339450 vorgeschlagene Verknüpfung von PÄG mit Alkydharzen über Aminoformaldehydharze erreicht. Nach dieser Methode aufgebaute Bindemittel eignen sich gut für ofentrocknende Lacke, da die unverbrauchten funktionellen Gruppen des Aminoharzes am Einbrennvorgang teilnehmen und einen Beitrag zur Filmvernetzung liefern können. Für lufttrocknende Lacke ist das Verfahren weniger geeignet, da das Aminoharz bei Normaltemperatur nicht reagiert, so dass weiche und wasserempfindliche Filme entstehen. Ausserdem kann das Verfahren wegen mangelnder Verträglichkeit der Komponenten nicht auf langölige, hydroxylarme Alkydharze oder Öllackbindemittel angewendet werden.

Die Modifizierung von Alkydharzen und Ölen mit Phenolharzen ist an sich seit langem bekannt. Aus der DE-PS 23 23 546 und der DE-OS 24 46 439 sind auch wasserverdünnbare, phenolharzmodifizierte Alkydharze bekannt. Die beschriebenen Produkte enthalten kein Polyäthylenglykol, d.h. die Emulgierbarkeit beruht ausschliesslich auf der Salzbildung an den Carboxylgruppen. Die Harze haben hohe Säurezahlen und benötigen daher zur Überführung in die wasserlösliche Form grosse Mengen an den meist toxischen Aminen. Es ist klar, dass diese ionischen Gruppierungen bei der Lufttrocknung weitestgehend erhalten bleiben, wodurch die Beständigkeitseigenschaften der Lackfilme negativ beeinflusst werden.

Es wurde nun gefunden, dass man lufttrocknende Lackbindemittel, welche ohne Verwendung zusätzlicher Emulgatoren zu wässerigen Emulsionen mit ausgezeichneter Lagerstabilität verarbeitet werden können, erhält, wenn man in einer mehrstufigen Reaktion zunächst ein Polyäthylenglykol (PÄG) mit einem Phenolformaldehydkondensat unter Verätherung umsetzt, dann das erhaltene PÄG-modifizierte Phenolharz mit einem ungesättigten, praktisch hydroxylfreien Ölfettsäure-Polyolester, insbesondere einem trocknenden Öl zur Reaktion bringt und schliesslich das dabei gewonnene PÄG-Phenolharz-modifizierte Reaktionsprodukt in bekannter Weise zu einem Alkydharz oder Öllackbindemittel verarbeitet.

Die vorliegende Erfindung betrifft daher ein Verfahren zur Herstellung von wasseremulgierbaren lufttrocknenden Lackbindemitteln auf der Basis von modifizierten trocknenden Ölen, welches dadurch gekennzeichnet ist, dass man in einer ersten Stufe

10–35 Gew.-% eines Polyäthylenglykols mit einem durchschnittlichen Molekulargewicht zwischen 500 und 5000, mit

5–25 Gew.-% eines durch alkalische Kondensation gewonnenen, niedermolekularen Formaldehydkondensates eines Mono-$(C_3–C_9)$alkylphenols und/oder Arylphenols mit einer durchschnittlichen Methylolfunktionalität von mindestens 1,5 bis 1,8 bei 100 bis 160 °C umsetzt, wobei das Phenol-Formaldehydkondensat im stöchiometrischen Überschuss eingesetzt wird, das Reaktionsprodukt in zweiter Stufe bei 180 bis 250 °C mit

40–85 Gew.-% eines natürlichen oder künstlich hergestellten, praktisch hydroxylfreien Esters aus ungesättigten Ölfettsäuren und Polyolen mit einer Jodzahl von mehr als 125 kondensiert und das erhaltene Produkt in einer dritten Stufe in bekannter Weise zu einem Alkydharz oder zu einem Öllackbindemittel verarbeitet, wobei die Mengenverhältnisse so gewählt werden, dass das Endprodukt 4–12 Gew.-% Polyäthylenglykol enthält, eine Säurezahl von 10–30 mg KOH/g und eine Grenzviskosität von 8–15 ml/g (gemessen in Chloroform bei 20 °C) aufweist.

Durch das erfindungsgemässe Verfahren erhält man feinteilige, transparente Emulsionen, welche zur Formulierung von lufttrocknenden Anstrichmitteln geeignet sind. Die Emulsionen zeichnen sich durch eine gegenüber dem Stand der Technik wesentlich verbesserte Lagerstabilität, auch bei erhöhter Temperatur aus und zeigen ein ausgezeichnetes Trocknungsverhalten. Die daraus hergestellten Überzüge weisen gute Wasserbeständigkeit auf.

In der ersten Stufe der Reaktion reagiert das PÄG mit den Methylolgruppen des Phenol-Formaldehydkondensates unter Verätherung. Dabei wird, um einerseits eine quantitative Verätherung des PÄG zu gewährleisten und andererseits die weitere Reaktion des Kondensates mit dem Öl zu ermöglichen, das Phenolharz äquivalentmässig im Überschuss angewendet. Diese Reaktion kann gegebenenfalls durch Zugabe einer organischen Säure katalysiert werden. Für die zweite Reaktionsstufe kann die Bildung von Chromanringbindegliedern zwischen dem Phenolharz und den Doppelbindungen der Fettsäuren angenommen werden. Diese Reaktion läuft nach Hultzsch, Chemie der Phenolharze, Berlin, Göttingen, Heidelberg: Springer 1950, über eine Chinonmethid-Zwischenstufe.

Die Methylolätherbindung zwischen PÄG und dem aus dem Phenolharz stammenden Benzolkern ist im schwach alkalischen Medium sehr stabil. Da die nächste Esterbindung von der PÄG-Kette durch die voluminöse Chromangruppe und einen Teil der Fettsäurekette getrennt ist, ist der Wasserangriff sehr erschwert. Ausserdem geht auch bei Verseifung dieser Esterbindung die Emulgierwirkung des PÄG nicht verloren, da ja das Chromanfettsäurebindeglied als lyophile Gruppe im Molekül verbleibt.

Ausserdem hat sich gezeigt, dass man bei Anwendung des erfindungsgemässen Verfahrens zur Erzeugung von Emulsionen gleicher Teilchengrösse mit weniger PÄG auskommt als bei den bisher bekannten Verfahren. Der Grund hierfür ist u.a. eine vollständigere Umsetzung des PÄG mit den Reaktionspartnern durch die stufenweise Reaktion sowie eine stärkere Betonung des amphipathischen Molekülaufbaus durch direkte Bindung des PÄG an den lyophilen Phenol-Fettsäurekomplex. Dadurch wird eine merkliche Verbesserung der Trocknungsgeschwindigkeit sowie der Härte und Wasserfestigkeit der Lackfilme erreicht. Dazu kommt, dass die Phenolharzkomponente durch Steuerung der Autooxidation eine Verbesserung der Durchhärtung des Lackfilmes bewirkt.

Das Molekulargewicht des eingesetzten Polyäthylenglykols liegt zwischen 500 und 5000 – bevorzugt zwischen 1000 und 3000.

Als Phenol-Formaldehydkondensate werden niedermolekulare, im alkalischen Medium hergestellte Umsetzungsprodukte aus Monoalkylphenolen und/oder Arylphenolen mit Formaldehyd (allgemein als Resole bezeichnet) verwendet, die im Durchschnitt mindestens 1,5, vorzugsweise 1,8 Methylolgruppen enthalten sollen (Methylolfunktionalität mind. 1,5). Die eingesetzten Alkylphenole sind solche, welche als Substituenten Alkylreste mit 3 bis 9 Kohlenstoffatomen aufweisen, wie p-Isopropylphenol, Butylphenol, Amylphenol, Octyl- oder Nonylphenol. Bevorzugt wird p-tert.Butylphenol verwendet. Als Arylphenol kommt vorzugsweise Bisphenol A und Cumylphenol, insbesondere in Mischung mit Alkylphenolen zur Anwendung. Als Katalysator für die Reaktion zwischen dem PÄG und dem Phenolkondensat können gegebenenfalls bis zu 5 Gew.-%, bezogen auf alle in dieser Stufe vorliegenden Rohstoffe, einer organischen Säure, Mono- oder Dicarbonsäure aus der Gruppe ungesättigter Ölfettsäuren, (Meth)acrylsäure, Maleinsäure, Fumarsäure und die verschiedenen isomeren Phthalsäuren mitverwendet werden.

Zur Umsetzung mit dem PÄG-Resol-Umsetzungsprodukt sind ungesättigte Öle mit Jodzahlen von mehr als 125, sowie praktisch hydroxylfreie Ester der in diesen Ölen vorkommenden ungesättigten Fettsäuren mit Polyolen geeignet. Zu diesen Rohstoffen zählen die trocknenden und halbtrocknenden Öle, wie Leinöl, Sojaöl, Safloröl, Sonnenblumenöl, dehydratisiertes Rizinusöl, sowie die Ester der in diesen Ölen vorkommenden ungesättigten Fettsäuren mit z.B. Trimethyloläthan, Trimethylolpropan, Pentaerythrit, Neopentylglykol u.ä. Besonders geeignet sind Öle, deren Ölfettsäuren Doppelbindungen in zumindest teilweise konjugierter Konfiguration aufweisen, wie das beim Holzöl, Oiticicaöl, einzelnen Typen des dehydratisierten Rizinusöls, künstlich isomerisierten Ölen, sowie künstlich hergestellten Estern, welche solche Fettsäuren aufweisen, der Fall ist.

Die Verätherungsreaktion zwischen PÄG und Phenol-Formaldehydkondensat erfolgt bei 100 bis 160°C. Gegebenenfalls kann die Entfernung des Reaktionswassers durch azeotrope Schleppmittel beschleunigt werden. Die Umsetzung des Kondensats mit den Estern (Stufe 2) erfolgt bei 180 bis 250°C.

Die so gewonnenen Produkte werden nach üblichen Verfahren und mit Hilfe der für diese Verfahren dem Fachmann bekannten Rohstoffen zu Alkydharzen oder Öllackbindemitteln weiterverarbeitet (Stufe 3). So können Alkydharze durch Umesterung des PÄG-Phenolharz-modifizierten Öles mit Polyalkoholen und weiterer Veresterung mit Polycarbonsäuren hergestellt werden. Gegebenenfalls können zusätzliche Mengen trocknender Öle, der entsprechenden Ölfettsäuren sowie von cyclischen oder aromatischen Carbonsäuren mitverwendet werden. Durch Umsetzung niedrigmolekularer Alkydharzvorstufen aus diesen Rohstoffen mit Polyisocyanaten, vorzugsweise in Gegenwart geringer Mengen aprotischer Lösungsmittel können auch urethanmodifizierte Alkydharze hergestellt werden.

Ferner können die Alkydharze durch Copolymerisation mit Acryl- und/oder Vinylmonomeren oder durch Einbau von carboxyl- oder hydroxylfunktionellen Acryl- und/oder Vinylcopolymerisaten nach dem Monoglyceridprozess nach Solomon (The Chemistry of Organic Film Formers, New York 1967) modifiziert werden.

Die wasseremulgierbaren Öllackbindemittel können Standöle, Urethanöle oder harzmodifizierte Öle sein, welche nach den bekannten Methoden hergestellt werden.

In allen Fällen ist das Verhältnis der Komponenten so zu wählen, dass das Endprodukt einen PÄG-Gehalt von 4-12 Gew.-% aufweist bzw. die Reaktion so zu führen, dass eine Grenzviskositätszahl von 8-15 ml/g (gemessen in Chloroform bei 20°C) und eine Säurezahl von 10-30 mg KOH/g erreicht wird.

In einer besonderen Ausführungsform des erfindungsgemässen Verfahrens wird die Verätherungsreaktion zwischen dem PÄG und dem Phenolresol in Gegenwart eines Teiles oder der gesamten Menge des ungesättigten Öles vorgenommen. Diese Ausführungsform wird vorzugsweise dann verwendet, wenn das modifizierte Öl unmittelbar im gleichen Reaktor weiterverarbeitet werden soll. In diesem Fall ist in der ersten Stufe die Füllung des Reaktors in vielen Fällen zu gering, wodurch eine einwandfreie Reaktionsführung nicht gewährleistet ist.

In manchen Fällen kann es von Vorteil sein, anstelle eines PÄG-modifizierten Harzes entsprechend dem Prinzip von OE-PS 333 035 eine Mischung aus einem PÄG-reichen und einem PÄG-freien Harz einzusetzen, wobei der Gesamtgehalt an PÄG im angegebenen Rahmen bleibt.

Die Harze werden dann, gegebenenfalls nach Zugabe von maximal 20% organischer Hilfslösungsmittel, wie Butanol oder Monoäthylenglykolmonobutyläther bei 50 bis 100°C in Wasser emulgiert. Das Wasser enthält soviel einer organischen oder anorganischen Stickstoffbase, wie z.B. Triäthylamin oder Ammoniak, dass 50 bis 100% der freien Carboxylgruppen des Harzes neutralisiert werden.

Die nach dem erfindungsgemässen Verfahren hergestellten Produkte dienen als Basis für lufttrocknende wasserverdünnbare Lacke, welche nach den üblichen Verfahren aufgebracht werden können. Eine forcierte Trocknung bei Temperaturen bis etwa 80°C ist ebenso möglich, wie die Formulierung von Einbrennlacken. Im letzteren Fall werden geringe Anteile von Aminoharzen als zusätzliche Vernetzungsmittel dem Lackansatz zugegeben.

Die folgenden Beispiele erläutern das erfindungsgemässe Verfahren. Alle angegebenen Teile sind Gewichtsteile. Die angegebenen Grenzviskositätszahlen wurden in Chloroform bei 20°C bestimmt.

In den Beispielen werden die folgenden Phenol-Formaldehydkondensate verwendet:

PK 1: Aus 1 Mol p-tert-Butylphenol und 2,1 Mol Formaldehyd wird in bekannter Weise im alkalischen Milieu ein Resol mit durchschnittlich 1,9 Mol Methylolgruppen pro Molekül hergestellt.

PK 2: Nonylphenolresol mit ca. 2 Mol Methylolgruppen pro Molekül.

PK 3: Resol aus 3 Mol p-tert.Butylphenol, 1 Mol Bisphenol A und 10 Mol Formaldehyd. Mittlere Methylolfunktionalität: 2,2.

Beispiel 1

In einem geeigneten Reaktionsgefäss werden unter Schutzgas 320 Teile PÄG mit einem durchschnittlichen Molekulargewicht von 1500 mit 200 Teilen PK 1, sowie 20 Teilen Leinölfettsäuren 80 Minuten bei 120°C reagiert, wobei ca. 30 Teile Wasser abdestilliert werden. Anschliessend werden 900 Teile Holzöl zugegeben und die Temperatur auf 200°C gesteigert. Nach 75 Minuten ist die Reaktion beendet.

282 Teile dieses Vorprodukts werden in einem Kunstharzreaktor, welcher für das Azeotropverfahren eingerichtet ist, mit 210 Teilen p-tert. Butylbenzoesäure, 190 Teilen Pentyerythrit, 76 Teilen Leinölfettsäure sowie 0,4 Teilen Bleioctoat (10% Metallgehalt) und 0,4 Teilen Kalziumoctoat (4% Metallgehalt) versetzt und 90 Minuten bei 240°C umgeestert. Anschliessend wird nach Zugabe von 160 Teilen Phthalsäureanhydrid und 40 Teilen Tetrahydrophthalsäureanhydrid bei 200°C im Azeotropverfahren (Xylol) bis zu einer Säurezahl von 25 mg KOH/g verestert. Nach Abdestillieren des Kreislaufmittels wird die Veresterung bei einer Säurezahl von 20 mg KOH/g und einer Grenzviskositätszahl von 9 ml/g beendet. Das Alkydharz wird mit Äthylenglykolmonobutyläther (BUGL) auf einen Festkörpergehalt von 90% verdünnt und bei 60°C unter starkem Rühren 30 Teile Triäthylamin und 1260 Teile deionisiertes Wasser innerhalb 15-20 Minuten zugegeben. Die entstehende transparente, strukturviskose Emulsion hat einen Festkörpergehalt von 40% und einen pH-Wert von 8,5.

Beispiele 2-4

Gemäss Beispiel 1 werden folgende Harze bzw.

Emulsionen dieser Harze hergestellt. In der 1. Vorstufe kann das Öl (aus Stufe 2) ohne Veränderung der Eigenschaften des Endproduktes bereits bei der Verätherung anwesend sein, wobei jedoch auf die Aufrechterhaltung der Katalysatorkonzentration geachtet werden muss (Werte in Klammern).

| Beispiel | | 2 | 3 | 4+++) |
|---|---|---|---|---|
| Stufe 1: | PÄG ($\emptyset$ Molgew. 1500) | – | 45 | 100 |
| | PÄG ($\emptyset$ Molgew. 3000) | 35 | – | – |
| | PK 1 | – | 28 | 50 |
| | PK 2 | 22 | – | – |
| | PK 3 | – | – | – |
| | Tallöl+) | 1,7 (5) | – | – |
| | Leinölfettsäure | – | 2,5 (10) | – |
| | Methacrylsäure | – | – | 1,5 (3) |
| Stufe 2: | Oiticicaöl | 85 | – | – |
| | dehydratisiertes Rizinusöl | – | 100 | – |
| | Leinöl | – | 100 | – |
| | Holzöl | – | – | 150 |
| Stufe 3: | Pentaerythritol | 95 | 90 | – |
| | Holzöl | – | – | 400 |
| | Kolofonium | 80 | – | 100 |
| | Tallöl+) | 70 | – | – |
| | Leinölfettsäure | – | 30 | – |
| | Phthalsäureanhydrid | 100 | 100 | – |
| | Benzoesäure | – | 80 | – |
| | Hartharz++) | – | – | 230 |
| Endsäurezahl mg KOH/g | | 22 | 16,5 | 28 |
| Grenzviskositätszahl ml/g | | 8,8 | 9,6 | 14 |
| Emulgierung: | | | | |
| Butanol | | 50 | – | – |
| BUGL (Butylglykol) | | – | auf 95% | – |
| deionisiertes Wasser | | 650 | 640 | 1500 |
| Triäthylamin | | 18 | 16 | 50 |
| Festkörpergehalt % | | 40 | 45 | 40 |
| pH-Wert | | 8,6 | 9,1 | 9,3 |

+) enthaltend 80% Tallölfettsäuren und 20% Harzsäuren
++) Extrahartes, ölverträgliches, harzmodifiziertes Maleinatharz, Schmelzpunkt 110–125 °C, Säurezahl 15–25 mg KOH/g
+++) anstelle der Umesterung und der azeotropen Veresterung erfolgt in diesem Fall in der 3. Stufe eine Polymerisation bei 230 °C.

**Beispiel 5:**

Ein wasseremulgierbares Urethanalkydharz wird wie folgt hergestellt: In Gegenwart von 85 Teilen eines isomerisierten Leinöls mit einem Anteil von 40–45% konjugierter Linol- und Linolenfettsäure und einer Jodzahl von 170–180 werden 40 Teile PÄG (mittleres Molekulargewicht 1500) und 25 Teile PK 2 bei 140 °C veräthert, wobei 5 Teile Leinölfettsäure als Katalysator zugegeben sind. Nach 60 Minuten wird die Temperatur auf 200 °C erhöht und der Ansatz 90 Minuten bei dieser Temperatur gehalten.

Nach Zugabe von 70 Teilen Leinölfettsäure, 90 Teilen p-tert.Butylbenzoesäure, 100 Teilen Pentaerythrit, sowie je 0,2 Teilen Bleioctoat und Kalziumoctoat wird der Ansatz 90 Minuten bei 240 °C umgeestert. Das Alkydharzvorprodukt wird anschliessend nach Zusatz von 40 Teilen Tetrahydrophthalsäureanhydrid im Azeotropverfahren bei 200 °C durch Veresterung bis zu einer Säurezahl von 25 mg KOH/g hergestellt. Das Harz weist nach Abdestillieren des Kreislaufmittels im Vakuum eine Säurezahl von 21,6 mg KOH/g und eine Grenzviskositätszahl von 6,6 ml/g auf.

95 Teile dieses Alkydharzvorproduktes werden mit 11 Teilen Methylisobutylketon bei 80 °C homogen vermischt und nach Zugabe von 5 Teilen Toluylendiisocyanat auf 90 °C erwärmt. Nach 60 Minuten werden 0,2 Teile Dibutylzinndilaurat zugegeben und die Temperatur weitere 5 Stunden gehalten. Das resultierende Harz, welches einen Festkörpergehalt von 90,6%, eine Säurezahl von 20 mg KOH/g und eine Grenzviskositätszahl von 9,1 ml/g aufweist, wird nach Zusatz von 3,5 Teilen Triäthylamin in 139 Teilen Wasser emulgiert. Die Emulsion hat einen Festkörpergehalt von 40% und einen pH-Wert von 9,25.

Beispiel 6

Das folgende Beispiel zeigt die Herstellung eines wasseremulgierbaren acrylmodifizierten Alkydharzes.

Aus 90 Teilen des auch in Beispiel 5 verwendeten isomerisierten Leinöls, 40 Teilen PÄG (mittl. Molgew. 1500), 20 Teilen PK 3 und 5 Teilen Rizinenfettsäure wird durch Verätherung bei 140°C (60 Minuten) und Kondensation bei 200°C (90 Minuten) ein Vorprodukt hergestellt, welches mit 65 Teilen Leinölfettsäure, 80 Teilen p-tert.Butylbenzoesäure, 90 Teilen Pentaerythrit, 10 Teilen Trimethylolpropan und je 0,2 Teilen Pb-Octoat und Ca-Octoat bei 240°C umgeestert wird. Dann werden bei 200°C 100 Teile eines Acrylharzvorproduktes (siehe unten) langsam zugegeben und 3 Stunden im Azeotropverfahren verestert. Anschliessend werden 40 Teile Phthalsäureanhydrid, 30 Teile Tetrahydrophthalsäureanhydrid und 30 Teile Hexachlor-endomethylentetrahydrophthalsäure zugegeben und die Veresterung bei 190°C bis zu einer Säurezahl von 20 mg KOH/g fortgesetzt. Nach Abdestillieren des Kreislaufmittels weist das Harz eine Säurezahl von 17,5 mg KOH/g und eine Grenzviskositätszahl von 10,2 ml/g auf.

Das Harz wird nach Zugabe von 60 Teilen BUGL und 16 Teilen Triäthylamin in 725 g Wasser emulgiert. Die Emulsion weist einen Festkörper von 40% und einen pH-Wert von 8,9 auf.

Das Acrylharzvorprodukt ist ein Copolymerisat aus 70 Teilen Methylmethacrylat, 25 Teilen Styrol und 5 Teilen Acrylsäure, welches in 100 Teilen Xylol in Gegenwart von 2 Teilen Di-tert.Butylperoxid in üblicher Weise bei 135 bis 140°C hergestellt wurde und einen Festkörpergehalt von 50,7%, eine Säurezahl von 39,5 mg KOH/g und eine Grenzviskositätszahl von 14,3 ml/g aufweist.

Vergleichsversuche

Um die besonderen Vorteile des erfindungsgemässen Verfahrens zu demonstrieren, wird ein gemäss Beispiel 1 zusammengesetztes Harz nach dem bisher üblichen Verfahren hergestellt (Vergleichsversuch A). Im Vergleichsversuch B wurde zur Verbesserung der Stabilität des Vergleichsversuchs A der PÄG-Gehalt um 15% erhöht. Nach diesem Verfahren ist das PÄG nur über Esterbindungen eingebaut.

Vergleichsversuch A

In Gegenwart von je 0,2 Teilen Pb- und Ca-Octoat wurden 90 Teile Holzöl, 40 Teile Leinölfettsäure, 105 Teile PK 1 90 Minuten bei 240°C umgeestert. Nach Zugabe von 80 Teilen Phthalsäureanhydrid, 20 Teilen Tetrahydrophthalsäureanhydrid und 32 Teilen PÄG (mittleres Molgew. 1500) wird bei 200°C auf die gleichen Endwerte wie im Beispiel 1 verestert. Eine entsprechend Beispiel 1 hergestellte Emulsion ist wesentlich trüber und dünnflüssiger, was ein Zeichen für einen grösseren Teilchendurchmesser und damit eine schlechtere Emulsionsstabilität ist.

Vergleichsversuch B

Analog Vergleichsversuch A wird ein Harz, jedoch mit 38 Teilen PÄG, hergestellt, welches eine Säurezahl von 19,7 mg KOH/g und eine Grenzviskositätszahl von 9,1 ml/g aufweist. Eine daraus hergestellte Emulsion zeigte bezüglich Transparenz und Strukturviskosität ähnliche Eigenschaften wie die Emulsion des Beispiels 1.

Eine Vergleichsprüfung der Emulsionsstabilität zwischen dem Beispiel 1 und den Vergleichsversuchen A und B wurde unter langsamem Rühren bei 80°C durchgeführt und ergab folgende Werte:
B 1) Nach 24 Stunden: Rückgang der Viskosität und der Transparenz, jedoch kein Absetzen
VB A) Nach 7 Stunden koaguliert
VB B) Nach 7½ Stunden koaguliert.

Prüfung von pigmentierten Lacken

Aus den Emulsionen entsprechend Beispiel 1 bis 6, sowie Vergleichsversuch A und B werden Lacke hergestellt, welche in einem Pigment-Bindemittelverhältnis von 1:1 mit Titandioxid pigmentiert und mit 3% (bezogen auf Festharz) eines wasserverträglichen Sikkativgemisches (enthaltend 1,2% Co, 7,2% Ba, 3,2% Zn), 1% eines Antihautmittels und 0,5% eines Verlaufmittels versetzt werden. Die Lacke werden mit deionisiertem Wasser auf Applikationsviskosität verdünnt.

Prüfung der Lagerfähigkeit: in verschlossenem Gefäss bei 40°C während 3 Wochen; beurteilt wird die Veränderung der Viskosität (A), der Absetztendenz (B) und gegebenenfalls die Regenerierbarkeit (C).

Prüfung der Trocknungseigenschaften: 24 Stunden nach Herstellung der Lacke werden Filme entsprechend einer Trockenfilmstärke von 30 μm auf Glasstreifen aufgezogen und geprüft.

Prüfung der Wasserfestigkeit: Die Prüfung erfolgt nach 24 Stunden Lufttrocknung durch 24stündige Lagerung der Filme in Wasser bei 20°C.

Abkürzungen in Tab. 1:
Lagerfähigkeit:
(A) Viskosität:
VA:       Viskositätsabfall
LVA:      leichter Viskositätsabfall
(B) Absetztendenz:
LA:       leichtes Absetzen
KG:       koaguliert, in Klammer: Zeit in Tagen
(C) Regenerierbarkeit:
REG:      durch Zugabe 0,1% Triäthylamin normalisierbar, Bodensatz aufrührbar.
N.REG:    nicht regenerierbar
Wasserfestigkeit:
(A) Zustand unmittelbar nach dem Test:
LE:       leichte Erweichung
E:        Erweichung
SE:       starke Erweichung
(B) nach 8 Stunden:
REG:      regeneriert
RB:       Runzelbildung
(C) Blasengrad nach DIN 53 209

| Beispiel | | 1 | VB A | VB B | 2 | 3 |
|---|---|---|---|---|---|---|
| Lagerfähigkeit | (A) | VA | – | – | LVA | i.O. |
| | (B) | LA | KG (4) | KG (8) | LA | i.O. |
| | (C) | REG | N.REG | N.REG | REG | – |
| Trocknung klebfrei nach Stunden | | 1,5 | 1,5 | 2,5 | 2 | 4 |
| griffest nach Stunden | | 6,5 | 6,5 | 8 | 8 | 12 |
| Pendelhärte nach 1 Woche (DIN 53 154) | | 52 | 50 | 43 | 45 | 38 |
| Wasserfestigkeit | (A) | LE | LE | SE | LE | E |
| | (B) | REG | REG | RB | REG | REG |
| | (C) | m0/g0 | m0/g0 | m1/g2 | m0/g0 | m0/g0 |

| Beispiel | | 4 | 5 | 6 |
|---|---|---|---|---|
| Lagerfähigkeit | (A) | i.O. | LVA | VA |
| | (B) | i.O. | i.O. | LA |
| | (C) | – | REG | REG |
| Trocknung klebfrei nach Stunden | | 5,5 | 1,2 | 1,5 |
| griffest nach Stunden | | 12 | 4 | 8,5 |
| Pendelhärte nach 1 Woche (DIN 53 154) | | 41 | 59 | 50 |
| Wasserfestigkeit | (A) | LE | LE | LE |
| | (B) | REG | REG | REG |
| | (C) | m0/g0 | m1/g1 | m1/g1 |

## Patentansprüche

1. Verfahren zur Herstellung von wasseremulgierbaren lufttrocknenden Lackbindemitteln auf der Basis von modifizierten trocknenden Ölen, dadurch gekennzeichnet, dass man
10–35 Gew.-% eines Polyäthylenglykols (PÄG) mit einem durchschnittlichen Molekulargewicht zwischen 500 und 5000, vorzugsweise 1000 und 3000
5–25 Gew.-% eines durch alkalische Kondensation gewonnenen, niedermolekularen Formaldehydkondensates eines Mono-$(C_3-C_9)$alkylphenols und/oder Arylphenols mit einer durchschnittlichen Methylolfunktionalität von mindestens 1,5 bis 1,8, bei 100 bis 160°C umsetzt, wobei das Phenol-Formaldehydkondensat im stöchiometrischen Überschuss eingesetzt wird, das Reaktionsprodukt in zweiter Stufe bei 180 bis 250°C mit
40–85 Gew.-% eines natürlichen oder künstlich hergestellten, praktisch hydroxylfreien Esters aus ungesättigten Ölfettsäuren und Polyolen mit einer Jodzahl von mehr als 125 kondensiert und das erhaltene Produkt in einer dritten Stufe in bekannter Weise zu einem Alkydharz oder zu einem Öllackbindemittel verarbeitet, wobei die Mengenverhältnisse so gewählt werden, dass das Endprodukt 4–12 Gew.-% Polyäthylenglykol enthält, eine Säurezahl von 10–30 mg KOH/g und eine Grenzviskositätszahl von 8–15 ml/g (gemessen in Chloroform bei 20°C) aufweist.

2. Verfahren nach Anspruch 1, dadurch gekennzeichnet, dass man die Verätherung des Resols in Gegenwart eines Teiles oder des ganzen zur Kondensation vorgesehenen Ölfettsäureesters durchführt.

3. Verfahren nach den Ansprüchen 1 und 2, dadurch gekennzeichnet, dass man Resole auf Basis von Alkylphenolen, vorzugsweise p-tert. Butylphenol, und Arylphenolen oder Mischungen davon einsetzt.

4. Verfahren nach den Ansprüchen 1 bis 3, dadurch gekennzeichnet, dass man die Verätherung in Gegenwart von bis zu 5 Gew.-% organischer Mono- oder Dicarbonsäuren aus der Gruppe ungesättigte Ölfettsäuren, (Meth)acrylsäure, Maleinsäure, Fumarsäure, isomere Phthalsäuren durchführt.

5. Verfahren nach den Ansprüchen 1 bis 4, dadurch gekennzeichnet, dass man Ölfettsäureester zur Kondensation einsetzt, deren Doppelbindungen zumindestens teilweise eine konjugierte Konfiguration aufweisen.

6. Verfahren nach den Ansprüchen 1 bis 5, dadurch gekennzeichnet, dass man als Ölfettsäureester Holzöl, dehydratisiertes Rizinusöl oder isomerisiertes Leinöl einsetzt.

7. Verfahren nach den Ansprüchen 1 bis 6, dadurch gekennzeichnet, dass man den PÄG-Resolmodifizierten Ölfettsäureester in bekannter Weise zu einem urethan- oder vinyl- oder acrylmodifizierten Alkydharz umsetzt.

8. Verfahren nach den Ansprüchen 1 bis 7, dadurch gekennzeichnet, dass man den PÄG-Resolmodifizierten Ölfettsäureester in bekannter Weise zu einem Standöl oder harzmodifizierten Öl umsetzt.

**Revendications**

1. Procédé pour la préparation de liants pour vernis, émulsifiables dans l'eau, séchant à l'air à base d'huiles séchantes modifiées, caractérisé en ce qu'on fait réagir à 100–160°C
10–35% en poids d'un polyéthylène glycol (PEG) avec un poids moléculaire moyen entre 500 et 5000, de préférence entre 1000 et 3000,
5–25% en poids d'un condensat à bas poids moléculaire, obtenu par condensation alkaline du formaldéhyde et d'un mono-($C_3$–$C_9$)-alcoylphénol et/ou arylphénol avec une fonctionalité moyenne en méthylol de 1,5 à 1,8 au minimum, en employant le produit de condensation du phénol et du formaldéhyde en surplus stœchiométrique et qu'on condense le produit de réaction ainsi obtenu à 180 à 250°C dans une seconde opération avec
40–85% en poids d'un ester pratiquement exempt de groupes hydroxyle, naturel ou préparé synthétiquement au départ d'acides gras d'huiles non-saturés et de polyols, avec un indice d'iodure plusieurs de 125 et que dans une troisième opération on prépare de façon connue une résine alkyde ou un liant à base d'huile à l'aide du produit de réaction ainsi obtenu, en choisissant les quantités réactionnelles de façon que le produit final contienne de 4 à 12% en poids de polyéthylène glycol et qu'il ait un indice d'acide de 10 à 30 mg KOH/g et qu'il ait une viscosité inhérente limite de 8 à 15 ml/g (déterminé au chloroforme à 20°C).

2. Procédé selon la revendication 1, caractérisé en ce qu'on conduit l'éthérification du résol en présence d'une partie ou de la totalité de l'ester d'acide gras d'huile prévu pour la condensation.

3. Procédé selon les revendications 1 et 2, caractérisé en ce qu'on utilise des résols à base d'alcoylphénols, p.tert.butylphénol de préférence, et arylphénols ou leur combinaison.

4. Procédé selon les revendications 1 à 3, caractérisé en ce qu'on exécute l'étérification en présence du 5% en poids au maximum d'acides organiques mono- ou dicarboxyliques du groupe des acides d'huiles non-saturées, acide (méth)acrylique, acide maléique, acide fumarique, acides phtaliques isomériques.

5. Procédé selon les revendications 1 à 4, caractérisé en ce qu'on utilise pour la condensation des esters d'acides gras d'huile, dont les liaisons doubles sont en configuration conjugée.

6. Procédé selon les revendications 1 à 5, caractérisé en ce qu'on utilise comme esters d'acide gras d'huile l'huile de bois, l'huile de ricin déshydraté ou l'huile isomérisée de lin.

7. Procédé selon les revendications 1 à 6, caractérisé en ce qu'on réagit en mode connue l'ester d'acides d'huile modifié avec PEG et résols pour former une résine alkyde modifiée avec des groupes uréthanes, viniliques ou acryliques.

8. Procédé selon les revendications 1 à 7, caractérisé en ce qu'on réagit en mode connue l'ester d'acide d'huile modifié avec PEG et résols pour former une standolie ou une huile modifiée avec des résines synthétiques ou naturelles.

**Claims**

1. A method of preparing water emulsifiable air drying varnish binders based on modified drying oils characterized in that there is reacted at 100 to 160°C
10 to 35 percent by weight of a polyethylene glycol (PEG) having an average molecular weight of between 500 and 5000 preferable of between 1000 and 3000 with
5 to 25 percent by weight of a condensate of formaldehyde with a mono ($C_3$ to $C_9$) alkyl phenol and/or aryl phenol of lower molecular weight prepared by alkaline condensation and having an average methylol functionality of at least 1,5 to 1,8 said phenol-formaldehyde condensate being reacted in a stoichiometric excess amount and the reaction product in a second step is condensed at 180 to 250°C with
40 to 85 percent by weight of a natural of synthetic ester which is essentially free of hydroxyl groups prepared of unsaturated oil fatty acids and polyols having an iodine number of more than 12 and the product obtained is worked up in a third step to form an alkyd resin or an oil varnish binder, the amounts being chosen in a manner that the end product contains 4 to 12 percent by weight of polyethylene glycol and has an acid number of from 10 to 30 mg KOH per g and an inherent viscosity of from 8 to 15 ml/g (measured in chloroform at 20°C).

2. A method as claimed in claim 1 characterized in that etherification of the resol is carried out in the presence of a part of or of the whole amount of the oil fatty acid ester provided for condensation.

3. A method as claimed in claims 1 and 2 characterized in that there are reacted resols based on alkyl phenols, in particular p-tertiary butylphenol, and on aryl phenols or mixtures thereof.

4. Process as claimed in claims 1 to 3 characterized in that etherification is carried out in the presence of up to 5 percent by weight of organic mono- or di-carboxylic acids selected from the group consisting of unsaturated oil fatty acides, (meth)acrylic acid, maleic acid, fumaric acid and isomeric phtalic acids.

5. Process as claimed in claims 1 to 4 characterized in that oil fatty acid esters having double bounds at least a part of which are conjugated are used for condensation.

6. Process as claimed in claims 1 to 5 characterized in that as oil fatty acid esters wood oil, dehydrated castor oil or isomerized linseed oil are used.

7. Process as claimed in claims 1 to 6 characterized in that the PEG-resol modified oil fatty acid ester is reacted in a known manner to give an urethane or vinyl or acryl modified alkyd resin.

8. Process as claimed in claims 1 to 7 characterized in that the PEG-resol modified oil fatty acid ester is reacted in a known manner to give a stand oil or resin modified oil.